Europäisches Patentamt

(19) European Patent Office

Office européen des brevets

(11) Numéro de publication: **0 074 887**
**A1**

(12) # DEMANDE DE BREVET EUROPEEN

(21) Numéro de dépôt: 82401623.2

(51) Int. Cl.³: **C 04 B 11/02**

(22) Date de dépôt: 02.09.82

(30) Priorité: 04.09.81 FR 8116862

(43) Date de publication de la demande:
23.03.83 Bulletin 83/12

(84) Etats contractants désignés:
AT BE CH DE FR GB IT LI LU NL SE

(71) Demandeur: Dussel, Christian Germain Louis
91 route de Paris
F-31150 Saint Jory(FR)

(71) Demandeur: Klein, Victor
27 rue de 19 Novembre
F-57000 Metz Queuleu(FR)

(72) Inventeur: Dussel, Christian Germain Louis
91 route de Paris
F-31150 Saint Jory(FR)

(74) Mandataire: Combe, André
CABINET BEAU DE LOMENIE 55 rue d'Amsterdam
F-75008 Paris(FR)

(54) Procédé de préparation d'un plâtre nouveau, four pour la mise en oeuvre dudit procédé et applications dudit plâtre nouveau.

(57) La présente invention concerne un procédé de préparation d'un plâtre nouveau par chauffage d'un matériau connu comme pouvant donner naissance à du plâtre, caractérisé en ce que l'on utilise comme matériau de départ un produit sous forme de fines particules sur lequel on effectue les étapes successives suivantes : réalisation d'un mélange comprenant lesdites fines particules et de l'eau, dépôt de ce mélange en une galette d'épaisseur contrôlée, chauffage de ladite galette à une température comprise entre environ 250°C et environ 600°C pendant une durée suffisante pour transformer le matériau de départ en un plâtre, séchage à chaud du produit obtenu et délitage du produit obtenu pour donner naissance au nouveau plâtre en poudre.

Elle concerne également le nouveau plâtre obtenu selon le procédé et ses applications notamment agricoles.

EP 0 074 887 A1

./...

**Procédé de préparation d'un plâtre nouveau, four pour la mise en oeuvre dudit procédé et applications dudit plâtre nouveau.**

La présente invention concerne un procédé de préparation d'un plâtre nouveau; elle concerne également le plâtre nouveau ainsi obtenu et les applications dudit plâtre, notamment les applications spécifiques qui découlent des propriétés particulières de ce plâtre; elle concerne enfin un four utilisable pour la réalisation dudit procédé de préparation.

On sait que le procédé universellement utilisé pour la préparation du plâtre consiste successivement :

- à broyer en particules d'environ 2 à 5 mm de "diamètre" une pierre convenablement choisie (gypse),

- à sécher les particules ainsi obtenues après élimination des particules trop fines,

- à admettre dans un four, convenablement chauffé, ces particules sèches,

- puis à soumettre les particules sortant du four à un broyage fin,
puis on réalise le plus souvent, pour obtenir les plâtres les plus courants, un mélange convenable de diverses poudres.

Les caractéristiques essentielles de ce procédé sont les suivantes :

. d'une part, on admet dans le four des particules suffisamment petites pour pouvoir être traitées de façon homogène par la chaleur de ce four,

. d'autre part, on admet dans le four des particules sèches, ce qui paraît tout à fait raisonnable puisque le chauffage du gypse dans ledit four a pour fonction de déshydrater partiellement ce gypse.

Il a été trouvé maintenant que, si l'on réalisait le chauffage du produit de départ, alors que celui-ci contient une quantité notable d'eau, on obtenait un plâtre présentant des propriétés tout à fait nouvelles; il a été trouvé en outre que, si l'on réalisait le chauffage du produit de départ en présence de vapeur d'eau surchauffée (laquelle donne naissance à une structure alvéolaire du produit), il était possible d'obtenir directement un mélange de plâtres, ledit mélange présentant également des propriétés nouvelles.

La présente invention vise donc tout d'abord un procédé pour la préparation d'un plâtre nouveau.

Ce procédé est caractérisé en ce qu'on met en oeuvre successivement les étapes suivantes :

- broyage en fines particules d'une pierre convenablement choisie,

- réalisation d'un mélange comprenant lesdites fines particules et de l'eau, la quantité d'eau dans ledit mélange étant comprise entre 22 et 30% en poids,

- dépôt de ce mélange en une galette d'épaisseur contrôlée,

- chauffage de ladite galette à une température comprise entre environ 250°C et environ 500°C pendant une durée suffisante pour transformer le matériau de départ en plâtre, ce chauffage étant effectué dans une atmosphère de vapeur surchauffée,

- séchage à chaud du produit obtenu dans l'opération précédente, et

- délitage du produit obtenu pour donner naissance au nouveau plâtre en poudre.

On définit ci-après les diverses étapes du procédé selon l'invention.

1) On utilise comme produit de départ n'importe quel minéral connu pour pouvoir, par chauffage, donner naissance à du plâtre; on peut également utiliser des matériaux synthétiques tels que le phosphogypse.

Ce produit de départ est broyé, mais ce broyage a pour fonction de donner naissance à de fines particules, c'est-à-dire par définition à des particules dont la plus grande dimension est inférieure à environ 1 mm et de préférence inférieure à 0,5 mm. La nature et le but de ce broyage diffèrent donc assez profondément du "broyage" mis en oeuvre dans les procédés connus de préparation du plâtre. On notera que l'on utilise selon l'invention toutes les particules obtenues lors de ce broyage sans élimination des particules les plus fines comme cela se pratique pour les "broyages" utilisés dans les procédés connus.

Il va sans dire que, comme dans les procédés connus, les qualités des minéraux utilisés comme produits de départ ont une influence sur les propriétés du plâtre obtenu.

Il est clair également que, si on utilise comme produit de départ un matériau qui se présente déjà sous forme d'une poudre suffisamment fine, selon la définition ci-dessus, cette étape de broyage n'est pas nécessaire. C'est le cas par exemple lorsque l'on utilise comme produit de départ du phosphogypse.

2) La deuxième étape du procédé consiste à réaliser un mélange d'eau et de la poudre obtenue après la première étape décrite ci-dessus. La quantité d'eau à utiliser doit être suffisante pour que, lors de l'opération de chauffage prévue à la quatrième étape du procédé, il se produise un gonflement du mélange et la formation d'un gâteau alvéolaire. La quantité d'eau à utiliser est environ celle qui correspond au remplissage des vides laissés entre les grains disposés en vrac. Dans la pratique, les particules de matières solides sont introduites dans un récipient contenant de l'eau; le fond de ce récipient est en forme d'un tronc de cône renversé et la partie inférieure de ce tronc de cône est pourvue d'une vis sans fin qui sort en continu, un mélange de matières solides et d'eau convenant parfaitement à la mise en oeuvre de l'invention. On admet que le mélange de poudre et d'eau comporte environ :

- 78 à 70% en poids de matériau solide, ledit matériau ayant lui-même 15 à 20% d'eau de cristallisation,
- 22 à 30% en poids d'eau libre.

Si la quantité d'eau contenue dans le mélange est insuffisante (inférieure à environ 22% en poids), l'alvéolisation du produit lors du chauffage (alvéolisation décrite ci-après) se fera mal et le produit final présentera une qualité moindre. Si la quantité d'eau est trop importante (supérieure à environ 30% en poids), il n'y a plus possibilité de formation d'une galette (telle que décrite ci-après) et il faudra utiliser des calories inutiles pour l'évaporation de cette eau.

3) On réalise ensuite une "galette" à partir du mélange eau-particules obtenu dans l'opération précédente. La réalisation de cette galette est une opération tout à fait banale puisque le mélange s'étale très aisément en s'écoulant dans tout récipient ou sur tout transporteur sur lesquels il est admis. Mais l'épaisseur de cette galette a une importance certaine dans les résultats obtenus en mettant en oeuvre le procédé selon l'invention. En effet, on peut réaliser une galette relativement mince (de l'ordre de quelques millimètres) sur un transporteur continu; dans ce cas, d'une part, le chauffage provoquant la transformation du minéral en plâtre pourra être relativement rapide et, d'autre part, ledit chauffage (malgré le caractère isolant du matériau chauffé) pourra être relativement homogène dans toute l'épaisseur du matériau, c'est-à-dire pourra donner naissance à un nouveau plâtre présentant un spectre de propriétés assez étroit. On peut également, sur un transporteur continu ou sur des plateaux isolés, réaliser une galette relativement épaisse (1 à 3 cm par exemple), cette galette qui va gonfler au cours de la phase d'alvéolisation du chauffage va donner naissance à un matériau qui sera "cuit", alors qu'il aura une épaisseur de 2 à 5 cm par exemple; on conçoit que, dans ce cas, la cuisson pourra être hétérogène, ce qui donnera naissance à un plâtre nouveau présentant un spectre de propriétés correspondant à celui d'un mélange de plusieurs plâtres nouveaux élémentaires.

Il est donc clair que les propriétés du produit fini pourront dépendre de l'épaisseur de ladite galette.

4) On réalise ensuite le chauffage de cette "galette". Il a été constaté que, lorsque cette galette était soumise à une température supérieure à environ 250°C, on observait tout d'abord un gonflement de la galette par vaporisation de l'eau qui y est contenue; ce gonflement donne naissance à un produit alvéolaire dont la forme générale se stabilise lorsque la durée du chauffage atteint quelques minutes (3 à 5 min en général, encore que cette durée puisse dépendre de la température de chauffage). Cette phase du chauffage est appelée la phase d'alvéolisation car le produit obtenu se présente sous la forme d'un matériau alvéolaire (du type pierre ponce à grosses alvéoles).

Puis le matériau alvéolaire subissait les transformations physico-chimiques donnant naissance à la formation de plâtre.

Comme la "galette" utilisée comporte une proportion d'eau importante, l'alvéolisation et la transformation physico-chimique du matériau produisent un dégagement interne et externe de vapeur surchauffée. Comme le four dans lequel on réalise le chauffage est fermé (mais la pression à l'intérieur du four demeure la pression atmosphérique), l'ensemble de l'opération de chauffage s'effectue dans une atmosphère humide (de vapeur surchauffée).

Pour obtenir les transformations physico-chimiques du matériau de départ en un plâtre, on doit utiliser une température et une durée convenables. La température doit être supérieure à 250°C environ et peut atteindre 600°C; la qualité du produit final dépendra en partie de cette température. On notera que certains "plâtres" connus sont préparés à des températures supérieures à 600°C; il n'y a pas de raisons de penser qu'on ne pourrait pas selon l'invention utiliser ces températures supérieures mais, jusqu'à ce jour, les essais ayant conduit aux meilleurs résultats ont été réalisés entre 400 et 550°C environ. La durée de chauffage est variable et dépend de la température et, en partie, du matériau de départ; on peut indiquer comme ordre de grandeur une durée comprise entre 15 et 45 min.

La température à laquelle le matériau est soumis n'est pas nécessairement la même pendant toute la durée du chauffage; ainsi, par exemple, le matériau peut être soumis à une température de 300°C pendant 10 min (phase d'alvéolisation) puis de 450°C pendant environ 30 min (phase de transformation physico-chimique).

On pourrait même envisager de séparer matériellement les deux phases en stockant par exemple le produit alvéolaire intermédiaire; mais il semble que ce procédé, d'une part, présente un intérêt économique plus faible (perte de calories) et, d'autre part, nécessite des précautions dans la conservation et le réchauffage du produit alvéolaire du fait d'une modification possible de la teneur en eau de ce produit pendant le stockage.

5) Le produit sortant du four dans lequel a été réalisé le chauffage est ensuite admis dans une enceinte où il est maintenu à une température de l'ordre de 100 à 150°C pendant un certain temps. Dans cette enceinte, on permet en fait au produit de se refroidir progressivement et de se débarrasser, par diffusion, de la vapeur d'eau qui pourrait encore être emprisonnée dans le produit traité et qui pourrait de ce fait affecter les propriétés du plâtre final obtenu. Dans la pratique, le séjour du produit dans ladite enceinte est de l'ordre de 10 min à 20 min dans un four ventilé.

6) Le matériau (plâtre nouveau) sortant est ensuite délité pour donner naissance à un produit en poudre fine. On utilise le mot délité à la place du mot broyé pour mettre en évidence le fait que le matériau formé des petites particules obtenues lors du broyage initial ne présente aucune cohésion, se transforme en poudre par simple frottement ou chocs légers et que cette transformation ne nécessite qu'un travail mécanique très faible. Compte tenu de ce que les particules de plâtre final auront une granulométrie inférieure à celle du produit obtenu lors du broyage initial, il peut être important, pour les propriétés du produit fini, que ce broyage initial soit réalisé de façon à ne donner naissance qu'à une poudre très fine sans présence de particules trop importantes et que, par conséquent, ce broyage initial soit couplé avec une opération de tamisage.

Le nouveau plâtre obtenu selon l'invention présente, par rapport au plâtre "classique", un certain nombre de propriétés tout à fait particulières :

- les grains du nouveau plâtre présentent les uns envers les autres certaines propriétés collantes que l'on peut mettre en évidence en considérant l'angle fait par un tas de plâtre; pour les produits selon l'invention, le plâtre versé sur une surface plane formera un "tas" sensiblement tronconique dont l'angle au sommet est notablement plus faible que l'angle correspondant obtenu avec un plâtre classique;

- le plâtre nouveau gâché est également beaucoup plus "collant" que les plâtres moyens classiques; cette propriété est importante dans certaines utilisations de ce plâtre;

- le plâtre nouveau gâché a besoin de moins d'eau de gâchage que la plupart des plâtres classiques connus; d'autre part, le plâtre nouveau montre une sorte de contrôle de la quantité d'eau absorbée puisqu'il fait prise sous l'eau, ce qui est inconnu jusqu'à ce jour.

Il apparaît donc bien que le plâtre selon l'invention constitue un produit nouveau, d'une part, par ses propriétés physiques et, d'autre part, probablement par la structure chimique de certains de ses constituants.

La présente invention concerne également un dispositif (four) pour la mise en oeuvre du procédé. Les diverses étapes du procédé selon l'invention peuvent être réalisées dans des appareillages classiques connus que l'homme de l'art pourra calculer et agencer à son gré. Cependant, les conditions particulières dans lesquelles les opérations de chauffage et de séchage de la galette doivent être réalisées ont amené les inventeurs à concevoir un dispositif spécifique qui fait également l'objet de la présente invention.

Ce dispositif spécifique est un four à étages dans lequel est traité le mélange d'eau et de poudre, mélange qui est déposé sur des plateaux, ledit four étant caractérisé en ce qu'il comporte :

- à chaque étape, des rails sur lesquels se déplacent lesdits plateaux,

- un sas disposé en haut du four par lequel les plateaux sont admis à l'étage supérieur dudit four et un sas disposé en bas du four par lequel les plateaux sont sortis de l'étage inférieur dudit four,

- des moyens de chauffage, de préférence sous forme de cannes chauffantes étanches, disposés entre les étapes supérieurs dudit four; et des moyens permettant la régulation desdits moyens de chauffage,

- des plaques d'isolement disposées de part et d'autre desdits moyens de chauffage entre lesdits moyens de chauffage et les plateaux en circulation,

- des moyens pour assurer la circulation des plateaux dans le four, et

- des moyens permettant l'évacuation de la vapeur d'eau qui se dégage des plateaux lors du traitement.

Le nombre d'étages dépend des dimensions du four, de la durée du chauffage et du refroidissement ... Par exemple, on peut prévoir que chaque plateau parcourt un étage du four en une durée d'environ 5 min et que le nombre total d'étages de chauffe (c'est-à-dire d'étages entre lesquels seront disposés des éléments chauffants) sera de l'ordre de 5 à 7. Au-dessous de ces étages de chauffe, seront disposés un certain nombre d'étages sur lesquels les plateaux seront successivement admis et sur lesquels le matériau sera refroidi et sera débarrassé de vapeur d'eau; on a précisé que la température à laquelle cette opération était réalisée est d'environ 100 à 150°C; on utilisera par exemple 5 à 10 de ces étages de refroidissement.

Les plaques d'isolement utilisées sont destinées à assurer un chauffage radiant, une répartition relativement régulière de la chaleur et éviter les effets nocifs de la vapeur d'eau surchauffée sur les éléments chauffants. Ces plaques peuvent également être disposées entre les étages inférieurs du four, c'est-à-dire entre les étages ne comportant pas d'éléments chauffants.

Les moyens pour assurer la circulation des plateaux dans le four sont quelconques mais doivent être simples et robustes. On utilisera de préférence des moyens mécaniques impliquant l'emploi :

- d'une part, d'un élément basculant qui, recevant un plateau en provenance d'un étage, basculera pour amener ledit plateau au niveau de l'étage immédiatement inférieur,

- d'autre part, d'un élément poussoir qui, lorsque le plateau sera au niveau dudit étage immédiatement inférieur, poussera le train de plateaux situé sur cet étage.

Ces moyens de circulation seront situés aux deux extrémités du four et seront commandés automatiquement, de l'extérieur, par des dispositifs connus, de façon à coordonner les positions des éléments basculants et des poussoirs.

Le chargement du four à étage sera assuré, au niveau du plateau supérieur, par un sas ou tout moyen équivalent. Les plateaux seront remplis, avant entrée dans le four, avec une quantité déterminée du mélange de poudre et d'eau défini précédemment, ce mélange étant contenu dans une trémie ou un mélangeur agité extérieur au four. Le déchargement du four s'effectue au bas de celui-ci par un sas convenable; la température de la matière lors de la sortie du four sera de l'ordre de 80 à 100°C. Les plateaux seront avantageusement, après leur sortie du four, vidés automatiquement et remontés vers le dispositif de remplissage disposé à la partie haute du four. Ces deux opérations (vidage des plateaux et remontée des plateaux vides) s'effectueront par exemple mécaniquement à l'aide d'un dispositif à chaînes classique.

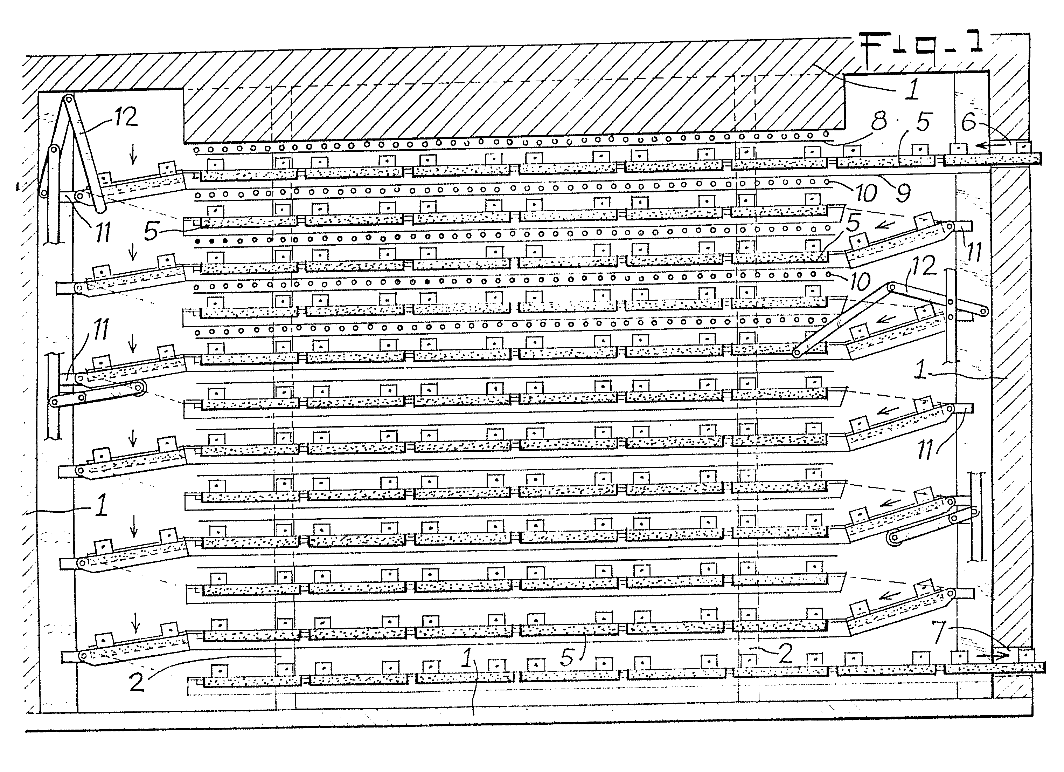

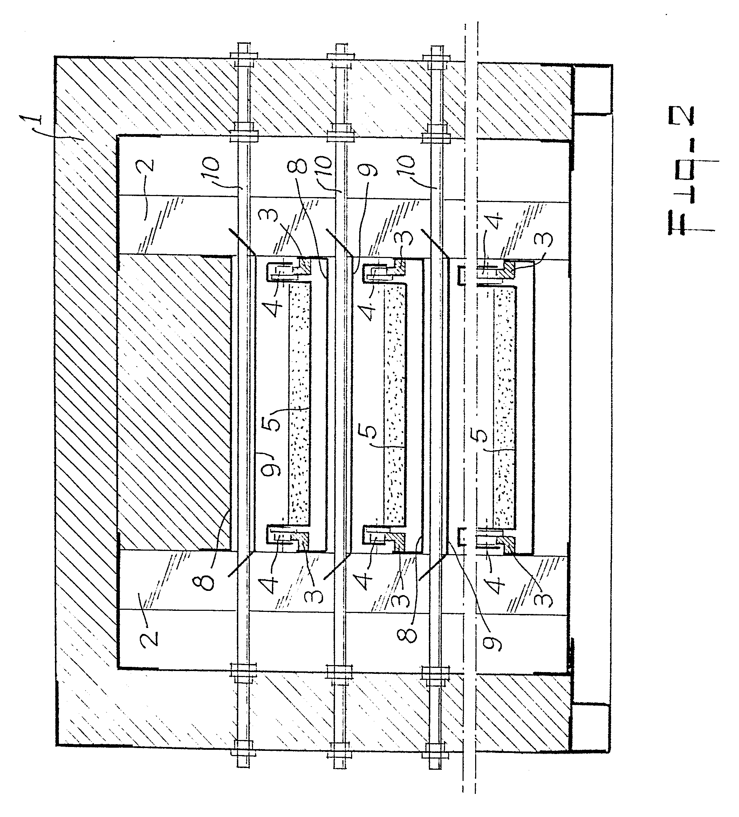

Un mode de réalisation du four selon l'invention est représenté sur les figures 1 et 2.

La figure 1 est une vue partielle en coupe longitudinale d'un four selon l'invention.

La figure 2 est une vue partielle en coupe transversale de ce four.

Sur les figures 1 et 2, on peut distinguer :

- en 1, la paroi du four ; ces parois sont en matériau réfractaire (acier spécial); le four a une forme parallélipédique ayant par exemple 3 à 9 m de longueur, 1 à 3 de largeur et 1 à 2,5 m de hauteur; ce four est maintenu par quatre piliers 2,

- ces piliers soutiennent des rails longitudinaux 3 (cf. figure 2); sur ces rails, roulent au moyen de galets 4 (cf. figure 2) des plateaux 5 dans lesquels le matériau à traiter (mélange de poudre et d'eau) a été admis,

- la disposition des paires de rails longitudinaux 3 est telle que ces rails forment dans le four un certain nombre d'étages; les plateaux chargés du matériau à traiter sont admis dans le four, sur les rails formant l'étage supérieur, par le sas 6; ces mêmes plateaux contenant le plâtre nouveau sortent du four au niveau des rails forment l'étage inférieur par le sas 7,

- chaque étage est matérialisé, outre une paire de rails, par deux plaques d'isolement, à savoir une plaque supérieure 8 et une plaque inférieure 9; ces plaques sont également en matériau réfractaire,

- dans les étages supérieurs, des éléments chauffants 10 sont disposés entre la plaque inférieure de l'étage supérieur et la plaque supérieure de l'étage inférieur; pour indiquer un ordre de grandeur, la hauteur totale de chaque étage (cette hauteur étant celle de l'espace dans lequel les plateaux sont admis) est de l'ordre de 8 à 12 cm, la hauteur d'un plateau étant de l'ordre de 2,5 à 4 cm,

- aux deux extrémités du four (cf. figure 1), sont aménagés des dispositifs mécaniques connus en eux-mêmes qui assurent, d'une part, le transfert d'un étage à l'autre des plateaux lorsque ceux-ci arrivent à l'extrémité du four (dispositif 11) et, d'autre part (dispositif 12), le déplacement des plateaux le long d'un étage, ce déplacement étant par exemple réalisé au moyen d'un poussoir.

L'exemple non limitatif suivant illustre un mode de réalisation (en discontinu) du procédé selon la présente invention.

On a utilisé comme produit de départ un gypse naturel contenant environ 17,5% d'eau (eau de constition et de cristallisation).

Ce gypse a été broyé dans un broyeur à marteau et la poudre obtenue a été tamisée à travers un tamis dont la maille avait environ 0,4 mm de cote.

A cette poudre, on a ajouté une quantité d'eau suffisante de façon à obtenir un mélange formé de 75% de ladite poudre et de 25% en poids d'eau. Le mélange a la forme d'une pâte malléable.

Ladite pâte a été déposée sur une plaque munie de rebords de façon à former une galette d'épaisseur environ 2,5 cm; la plaque a été introduite dans un four dont la température est maintenue à 500°C. La durée de séjour de la plaque dans le four a été de 15 à 30 min avec évacuation continue de la vapeur d'eau formée. A la sortie du four, on obtient un matériau solide alvéolaire d'une épaisseur d'environ 3,5 cm. Ce matériau a été maintenu à 125°C pendant environ 15 min.

Le matériau sortant de ce dernier four est ensuite délité pour fournir un plâtre présentant des propriétés exceptionnelles.

Avec le matériau selon l'invention, on peut réaliser l'expérience décrite ci-après.

Dans un récipient sec de 2 litres en forme conique, on introduit 100 g de "plâtre nouveau" et on remplit le récipient d'eau; on s'aperçoit qu'au bout d'environ 4 min le "plâtre nouveau" a subi un phénomène de prise et qu'il durcit progressivement; au bout d'environ 30 min à 1 h, on obtient un objet en forme de cône solide que l'on peut manipuler et laisser sécher hors de l'eau; le produit sec présentera des caractéristiques mécaniques très sensiblement égales à celles présentées par le même plâtre nouveau qui aurait été gâché avec environ 40% d'eau et séché.

Si on tente de reproduire cette expérience en utilisant un plâtre du commerce, il est pratiquement impossible d'obtenir un produit fini de forme déterminée présentant des propriétés mécaniques acceptables.

La présente invention concerne également les applications du plâtre nouveau selon l'invention et plus particulièrement les applications dans lesquelles les propriétés spécifiques dudit plâtre sont mises en oeuvre.

Ces applications sont essentiellement celles dans lesquelles le plâtre, seul ou en mélange avec d'autres produits, est amené à "faire prise" au contact d'un excès d'eau.

Parmi ces applications, on citera plus particulièrement l'utilisation du plâtre nouveau pour l'amélioration des sols.

On sait qu'il existe des sols instables; ce sont par exemple les sols sableux formant des dunes mouvantes. De tels sols ont besoin d'être stabilisés.

Mais ces mêmes sols présentent également le plus souvent la propriété de n'offir aucune "résistance" au passage de l'eau (comme par exemple l'eau de pluie), de telle sorte que l'eau arrivant sur un tel sol y pénètre profondément et se trouve en fait perdue pour toute utilisation dans les cultures. De tels sols ont donc besoin d'être traités en vue, soit de permettre une retenue de l'eau à leur surface (avec éventuellement une récupération), soit une retenue de l'eau dans une certaine couche de terrain en vue de la réalisation de cultures sur place.

Ainsi, un certain nombre de sols qui renferment en eux-mêmes suffisamment de substances nutritives pour permettre les cultures (cultures maraîchères par exemple) ou auxquels on pourrait fournir ces substances nutritives par des moyens connus (comme par exemple par l'adjonction d'engrais et/ou par arrosage à l'aide d'une eau contenant des additifs convenables) se révèlent en fait inaptes à ces cultures par suite d'une structure (notamment d'une porosité) inadaptée. C'est le cas notamment des sols constitués par du sable ou des produits sableux, sols qui recouvrent des surfaces considérables par le monde.

Ces problèmes peuvent être résolus grâce à l'utilisation du "plâtre nouveau" selon la présente invention.

Ce "plâtre nouveau" est utilisable selon l'invention sous plusieurs formes :

- en tant que "couverture" mince à la surface du sol permettant de stabiliser ce sol et de retenir l'eau qui viendrait à y tomber;
- en tant qu'adjuvant, en mélange avec les sols sablonneux en vue de conférer à ces sols une possibilité de cultures ou d'améliorer les possibilités de cultures de ces sols.

12

La couverture mince des sols mouvants ou exagérément poreux à l'aide du plâtre nouveau s'effectue par épandage à la surface de ces sols d'une couche de 1 à 5 mm environ de "plâtre nouveau"; sous l'influence de l'eau (apportée par arrosage ou pluie), il se forme, à la surface du sol, une légère carapace de plâtre ayant fait prise, cette carapace s'opposant de façon efficace à la fois aux mouvements des sols et à la perte d'eau à travers ces sols.

L'utilisation du "plâtre nouveau" en tant qu'adjuvant d'un sol en vue de la réalisation de cultures s'effectue par mélange dudit sol avec une "quantité suffisante" de "plâtre nouveau".

La "quantité suffisante" de "plâtre nouveau" qu'il convient d'utiliser dans la présente invention dépend bien évidemment de la nature du sol que l'on veut amender. Cette quantité est très généralement comprise entre 50 et 100 kg de plâtre nouveau par $m^3$ de sol à amender (sable); cette quantité pourra être adaptée en tenant compte des indications fournies ci-après.

Le rôle du "plâtre nouveau" utilisé est bien évidemment de faire prise lorsque l'on ajoute de l'eau aux sols selon l'invention. La préparation de ces sols consistera donc tout d'abord à réaliser un mélange du sol de départ avec la quantité convenable de "plâtre nouveau", à mettre ce mélange en place puis, après avoir mis en place les cultures à réaliser, arroser ces sols. Il se produit alors un durcissement du fait de la prise du plâtre nouveau présent dans le sol. Il est bien entendu que ce durcissement ne doit pas conduire à la formation d'une barrière (ou d'une croûte) qui serait de nature à empêcher ou à freiner le développement des cultures. Cela explique pourquoi la quantité maximale de plâtre nouveau à utiliser est de l'ordre de 100 kg par $m^3$ de sol à amender.

La terre nouvelle obtenue par mélange de la terre sablonneuse avec le plâtre nouveau présente un certain nombre de propriétés que l'on peut résumer comme suit :

- lors de la prise du "plâtre nouveau" (par action de l'eau), la cristallisation forme un enrobage des grains de sable ou des terres sablonneuses et entraîne une soudure partielle des grains entre eux en créant ainsi une stabilisation des grains formant la nouvelle terre;

- le sulfate de calcium contenu dans le mélange peut agir comme engrais des plantes qui sont cultivées;

- le mélange possède des propriétés d'isolation supérieures à celles de la terre de départ; ces propriétés sont souvent favorables à la germination et au développement des cultures;

- la prise du "plâtre nouveau" produit un certain emprisonnement de l'eau voisine; cette eau est absorbée ensuite par les plantes. Il faut environ 10 à 20 fois moins d'eau qu'avec la culture traditionnelle, c'est-à-dire qu'avec la même quantité d'eau on peut exploiter 10 à 20 fois plus d'hectares;

- du fait de la rétention de l'eau dans la partie active de la terre, les engrais ou oligo-éléments, éventuellement ajoutés avec de l'eau, ont un rendement exceptionnel;

- enfin, le mélange reste facile à travailler comme une terre "normale".

# R E V E N D I C A T I O N S

1.      Procédé de préparation d'un plâtre nouveau par chauffage d'un matériau, naturel ou synthétique, connu comme pouvant donner naissance à du plâtre, caractérisé en ce que l'on utilise comme matériau de départ un produit sous forme de fines particules sur lequel on effectue les étapes successives suivantes :

- réalisation d'un mélange comprenant lesdites fines particules et de l'eau, la quantité d'eau, dans ledit mélange, étant comprise entre 22 et 30% en poids,

- dépôt de ce mélange en une galette d'épaisseur contrôlée,

-chauffage de ladite galette à une température comprise entre environ 250°C et environ 600°C pendant une durée suffisante pour transformer le matériau de départ en un plâtre, ce chauffage étant effectué dans une atmosphère de vapeur surchauffée,

- séchage à chaud du produit obtenu dans l'opération précédente, et

- délitage du produit obtenu pour donner naissance au nouveau plâtre en poudre.

2.      Procédé selon la revendication 1, caractérisé en ce que le matériau de départ est obtenu par broyage d'un matériau naturel ou synthétique, ce broyage étant réalisé jusqu'à l'obtention d'un produit dont les particules ont une dimension maximale inférieure à 1 mm et de préférence inférieure à 0,5 mm.

3.      Procédé selon l'une des revendications 1 et 2, caractérisé en ce que ledit chauffage est réalisé pendant une durée comprise entre 15 et 45 min.

4.      Procédé selon l'une des revendications 1, 2 et 3, caractérisé en ce que le séchage est réalisé par passage du produit dans une zone de four dont la température est comprise entre environ 100 et environ 150°C.

5.      Four permettant d'assurer les opérations de chauffage et de séchage du procédé selon l'une des revendications 1 à 4, caractérisé en ce qu'il est constitué par une série d'étages, chaque étage

15   0074887

étant constitué par des rails sur lesquels se déplacent les plateaux, contenant le mélange à traiter, par un sas d'entrée par lequel les plateaux sont amenés à l'étage supérieur et un sas de sortie par lequel les plateaux sortent de l'étage inférieur, par des moyens de chauffage disposés entre les étages supérieurs, par des plaques d'isolement disposées de part et d'autre desdits moyens de chauffage entre lesdits moyens de chauffage et les plateaux en circulation, par des moyens pour assurer la circulation des plateaux dans le four le long des étages successifs et par des moyens permettant l'évacuation de la vapeur d'eau produite dans le four.

6.      Plâtre nouveau faisant notamment prise sous l'eau, caractérisé en ce qu'il est obtenu par le procédé selon l'une des revendications 1 à 4.

7.      Utilisation du plâtre nouveau selon la revendication 6 pour l'amélioration des sols.

0074887

Fig. 1

FIG-2

0074887

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| | --- | | C 04 B 11/02 |
| Y | DE-A-1 935 903 (GEBR. KNAUF, WESTDEUTSCHE GIPSWERKE) *Revendication 1; exemples 1-3* | 1-5 | |
| Y | DE-A-1 929 956 (FA. PROGIL; CIMENTS LAFARGE; PARIS) *Revendications 1,2* | 1-5 | |
| A | FR-A- 821 808 (ETABLISSEMENTS POLIET & CHAUSSON) *Page 3, lignes 26-32; revendication 1* | 1-5 | |

DOMAINES TECHNIQUES
RECHERCHES (Int. Cl. ³)

C 04 B
C 01 F

Le présent rapport de recherche a été établi pour toutes les revendications

| Lieu de la recherche LA HAYE | Date d'achèvement de la recherche 08-12-1982 | Examinateur STANGE R.L.H |
|---|---|---|